# EUROPEAN PATENT APPLICATION

(11) **EP 3 979 213 A2**
(43) Date of publication of application: **06.04.2022**
(21) Application number: 21199530.3
(22) Date of filing: 28.09.2021
(51) Int. Cl.: G06V 10/422, G06V 20/69

(54) **NUCLEIC ACID DETECTOR AND IMAGE-BASED NUCLEIC ACID DETECTION METHOD**

(30) Priority: 30.09.2020 US 202063085377 P; 14.10.2020 US 202063091521 P; 31.05.2021 CN 202110602307
(71) Applicant: iCare Diagnostics International Co. Ltd., New Taipei 236 (TW)
(72) Inventor: WANG, KUAN-HUA, New Taipei 236 (TW); WANG, YU-CHING, New Taipei 236 (TW); HUANG, YI-JEN, New Taipei 236 (TW); CHANG, EN-CHIEH, New Taipei 236 (TW); HUANG, CHUN-HSIANG, New Taipei 236 (TW); HUANG, SHENG-CHIEN, New Taipei 236 (TW)
(74) Representative: Zaboliene, Reda

(57) **Abstract**

An image-based nucleic acid detection method applied to a nucleic acid detector is provided. The method includes obtaining a plurality of images when detection liquid is performing electrophoresis. Once a target image is recognized from the plurality of images, a nucleic acid detection result is analyzed based on the target image.

## Description

### FIELD

The present disclosure relates to virus detection technology, in particular to a nucleic acid detector and an image-based nucleic acid detection method.

### BACKGROUND

At present., most virus-testing by molecular diagnosis, morphology, and immunology are carried out in fixed laboratories. Testing in this way is problematic, long delays in detection in the laboratory, low detection efficiency, poor flexibility, and complex operations which requires professional operators to operate and cannot realize home self- detection.

### SUMMARY

To overcome the above shortcomings, the present disclosure an image-based nucleic acid detection method applied to a nucleic acid detector. The method includes obtaining a plurality of images when detection liquid is performing electrophoresis; recognizing a target image from the plurality of images; and analyzing a nucleic acid detection result based on the target image.

In some embodiments, the method further includes collecting a biological sample of a tester using a collection cup of the nucleic acid detector, and forming the detection liquid by mixing the biological sample with a detection agent; installing the collection cup on a heating tank of the nucleic acid detector; heating the detection liquid in the collection cup for a first preset time duration at a preset first temperature value using the heating tank; sucking the detection liquid from the collection cup and adding the detection liquid into a detection box inside a drawer via a sample adding tank by a sampler of the nucleic acid detector, wherein the detection box performs polymerase chain reaction on the detection liquid; and adding fluorescent dye to the detection liquid, and electrophoresing the detection liquid with gel.

In some embodiments, the obtaining the plurality of images includes controlling a time relay to calculate a time duration of the electrophoresis; and obtaining the plurality of images, when the detection liquid is electrophoresed for a second preset time duration, by a second camera to capture at least one image every third preset time duration.

In some embodiments, the recognizing the target image from the plurality of images includes recognizing a plurality of target areas in each of the plurality of images by applying a recognition model, and labeling each target area of the plurality of target areas with a preset mark; and determining the target image from the plurality of images based on a determination of whether a designated target appears within a predetermined position range of each of the plurality of images.

In some embodiments, the recognizing the plurality of target areas in each of the plurality of images by applying the recognition model includes recognizing the plurality of target areas from a first image among the plurality of images by applying the recognition model; cropping each of other images according to a position and a size of an area occupied by the gel in the first image; and recognizing the plurality of target areas from each of the other image that is cropped and labeling each target area with the preset mark.

In some embodiments, the first image is an image having an earliest capture time among the plurality of images; the other images in the plurality of images are all images in the plurality of images except the first image.

In some embodiments, the target image is an image in which fluorescent dye is within a predetermined position range.

In some embodiments, the target image is an image of which the fluorescent dye appears within the predetermined position range, and a confidence score of each target area is greater than a preset score.

In some embodiments, the analyzing the nucleic acid detection result based on the target image includes determining positions of a plurality of targets according to a mark corresponding to each of the plurality of target areas in the target image, wherein the positions of the plurality of targets include a position of an injection port, a position of the fluorescent dye, a position of a detection line, and a position of the gel, wherein the detection line includes a first line, a second line, and a third line; calculating a position value of the detection line based on the positions of the plurality of targets; determining whether the detection line is valid according to a comparison between the position value of the detection line and a preset valid data range; and determining the nucleic acid test result according to whether the detection line is valid.

In some embodiments, P1 represents the position value of the first line, P1 = d11/d2; P2 represents the position value of the second line, P2 = d12/d2; and P3 represents the position value of the third line, P3=d13/d2; wherein d11 represents a distance between the position of the first line and the position of the injection port; d12 represents a difference between the position of the second line and the position of the injection port; d13 represents a distance between the position of the third line and the position of the injection port: and d2 is equal to a distance between the position of the injection port and the position of the fluorescent dye.

The present disclosure further provides a nucleic acid detector, including a storage device, at least one processor, and the storage device storing one or more programs, which when executed by the at least one processor, cause the at least one processor to obtain a plurality of images when detection liquid is performing electrophoresis; recognize a target image from the plurality of images; and analyze a nucleic acid detection result based on the target image.

In some embodiments, the nucleic acid detector further includes a collection cup configured for collecting a biological sample, the biological sample is mixed with a detection agent to form the detection liquid; a heating tank configured for heating the detection liquid in the collection cup for a first preset time duration at a preset first temperature value when the collection cup is installed on the heating tank; and a sampler configured for sucking the detection liquid from the collection cup and adding the detection liquid into a detection box inside a drawer via a sample adding tank, the detection box performs polymerase chain reaction on the detection liquid, wherein when the detection liquid completes the polymerase chain reaction, fluorescent dye and gel are added in the detection liquid, and electrophoresis is performed on the detection liquid.

In some embodiments, the obtaining the plurality of images includes controlling a time relay to calculate a time duration of the electrophoresis; and obtaining the plurality of images, when the detection liquid is electrophoresed for a second preset time duration, by a second camera to capture at least one image every third preset time duration.

In some embodiments, the recognizing the target image from the plurality of images includes recognizing a plurality of target areas in each of the plurality of images by applying a recognition model, and labeling each target area of the plurality of target areas with a preset mark; and determining the target image from the plurality of images based on a determination of whether a designated target appears within a predetermined position range of each of the plurality of images.

In some embodiments, the recognizing the plurality of target areas in each of the plurality of images by applying the recognition model includes recognizing the plurality of target areas from a first image among the plurality of images by applying the recognition model; cropping each of other images according to a position and a size of an area occupied by the gel in the first image; and recognizing the plurality of target areas from each of the other image that is cropped and labeling each target area with the preset mark.

In some embodiments, the first image is an image having an earliest capture time among the plurality of images; the other images in the plurality of images are all images in the plurality of images except the first image.

In some embodiments, the target image is an image in which fluorescent dye is within a predetermined position range.

In some embodiments, the target image is an image of which the fluorescent dye appears within the predetermined position range, and a confidence score of each target area is greater than a preset score.

In some embodiments, the analyzing the nucleic acid detection result based on the target image includes determining positions of a plurality of targets according to a mark corresponding to each of the plurality of target areas in the target image, wherein the positions of the plurality of targets include a position of an injection port, a position of the fluorescent dye, a position of a detection line, and a position of the gel, wherein the detection line includes a first line, a second line, and a third line; calculating a position value of the detection line based on the positions of the plurality of targets; determining whether the detection line is valid according to a comparison between the position value of the detection line and a preset valid data range; and determining the nucleic acid test result according to whether the detection line is valid.

In some embodiments, P1 represents the position value of the first line, P1 = d11/d2; P2 represents the position value of the second line, P2 = d12/d2; and P3 represents the position value of the third line, P3=d13/d2; wherein d11 represents a distance between the position of the first line and the position of the injection port; d12 represents a difference between the position of the second line and the position of the injection port; and d13 represents a distance between the position of the third line and the position of the injection port, and d2 is equal to a distance between the position of the injection port and the position of the fluorescent dye.

In the present disclosure, when the electrophoresis is performed for a preset time duration, multiple images of the detection liquid during the electrophoresis are captured. A recognition model is used to recognize the images, a target image is determined from the images, and a recognition result is labeled. The detection is convenient, and the home self-test can be realized.

### BRIEF DESCRIPTION OF THE DRAWINGS

FIG. 1 is a schematic diagram of a nucleic acid detector in a preferred embodiment of the present disclosure.
FIG. 2 is a schematic diagram of a disassembly structure of the nucleic acid detector in a preferred embodiment of the present disclosure.
FIG. 3 is a hardware framework diagram of a nucleic acid detector in a preferred embodiment of the present disclosure.
FIG. 4A illustrates an image taken during a process of an electrophoresis analysis.
FIG. 4B and FIG. 4C illustrate target areas of the image.
FIG. 5A is a block diagram of a nucleic acid detection system according to a preferred embodiment of the present disclosure.
FIG. 5B is a flowchart of a nucleic acid detection method according to a preferred embodiment of the present disclosure.
FIG. 6 illustrates targets in a target image.
FIG. 7 illustrates a calculation of distances between different targets.
FIG. 8 illustrates detection lines in the target image.
FIG. 9 illustrates identifying a nucleic acid detection result according to a result of whether the detection line is valid.

### DETAILED DESCRIPTION

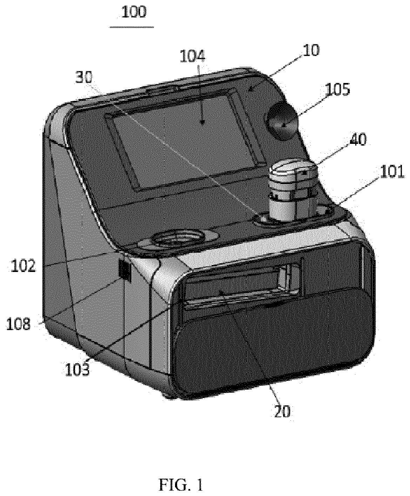

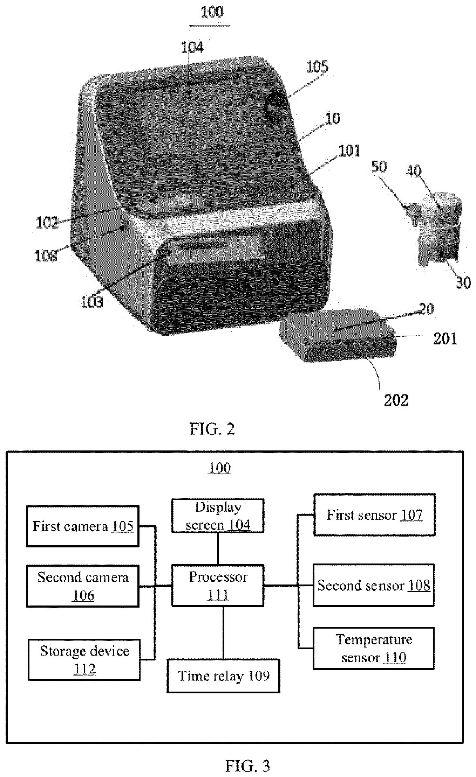

FIG. 1 is a schematic diagram of a nucleic acid detector in a preferred embodiment of the present disclosure. FIG. 2 is a schematic diagram of a disassembly structure of the nucleic acid detector in a preferred embodiment of the present disclosure. FIG. 3 is a hardware framework diagram of a nucleic acid detector in a preferred embodiment of the present disclosure.

Referring to FIG. 1, FIG. 2, and FIG. 3, in this embodiment, a nucleic acid detector 100 includes a host 10, a detection box 20, a collection cup 30, and a sampler 40. In this embodiment, the collection cup 30 is further equipped with a cup cover 50.

It should be noted that, before the detection, the detection box 20, the collection cup 30, the sampler 40, and the cup cover 50 can be put in a designed packaging box (not shown in the figure). In this embodiment, each of the detection box 20, the collection cup 30, and the sampler 40 includes an identification code (encoding information). In one embodiment, the detection box 20, the collection cup 30, and the sampler 40 in a same packaging box may have same identification codes. Such that it avoids confusion of biological samples (also known as "nucleic acid samples") such as saliva of different testers (person under tested).

In one embodiment, the identification code may be a two-dimensional code, a bar code, or any other identification code suitable for the present disclosure. In this embodiment, the nucleic acid detector 100 further includes a heating tank 101, a sample adding tank 102, a drawer (also referred to as a "test box drawer") 103, a display screen 104, a first camera 105, a second camera 106, a first sensor 107, a second sensor 108, one or more time relays 109, a plurality of temperature sensors 110, at least one processor 111, and a storage device 112. The display screen 104, the first camera 105, the second camera 106, the first sensor 107, the second sensor 108, the one or more time relays 109, the plurality of temperature sensors 110, the at least one processor 111, and the storage device 112 are in communication with each other.

In this embodiment, the collection cup 30 is detachably arranged in the heating tank 101. The sample adding tank 102 is interconnected with the drawer 103. The detection box 20 is detachably arranged in the drawer 103.

In this embodiment, the collection cup 30 is used to collect biological sample of the tester. After a detection liquid is formed by mixing the biological sample in the collection cup 30 with a detection agent (for example, buffer liquid), the collection cup 30 can be installed in the heating tank 101, and the heating tank 101 can be used to heat the detection liquid with a first temperature value (for example, 95 degrees Celsius) for a first predetermined period of time (for example, 20 minutes). Then the sampler 40 can be used to quantitatively suck the detection liquid from the collection cup 30, and the sampler 40 can be used to add the sucked detection liquid to the detection box 20 that is set inside the drawer 103 via the sample adding tank 102.

In this embodiment, the display screen 104 may be a display screen having a touch function, which is used to provide an interface to realize an interaction between a user (also referred to as an "operator") and the nucleic acid detector 100. For example, the display screen 104 may be used to display a nucleic acid detection result of the detection liquid corresponding to the tester.

In this embodiment, the first camera 105 can be used to scan the identification code of the collection cup 30 and the identification code of the sampler 40. The processor 111 may store the identification code scanned by the first camera 105 in the storage device 112.

In a preferred embodiment of the present disclosure, the first camera 105 is also used to capture images during a process of the operator operating the nucleic acid detector 100. The processor 11 also stores the images taken by the first camera 105 in the storage device 112.

In this embodiment, the second camera 106 can be used to capture images of a result of a reaction between a ribonucleic acid reagent and the detection liquid (i.e., images of an electrophoresis analysis in a nucleic acid detection process). In a preferred embodiment of the present disclosure, the image captured by the second camera 106 can be a black and white image. In other embodiments, the image captured by the second camera 106 can be a color image. In this embodiment, the second camera 106 can also be used to scan the identification code of the detection box 20. In an embodiment, the image captured by the second camera 106 may further include the identification code of the detection box 20.

In this embodiment, the first sensor 107 is used to detect whether the collection cup 30 is placed in the heating tank 101.

In this embodiment, the first sensor 107 may be a push switch. Specifically, when the collection cup 30 is placed in the heating tank 101, the first sensor 107 is in a power-on state; and when the collection cup 30 is not placed in the heating tank 101, the first sensor 107 is in a power-off state, and therefore, whether the collection cup 30 is placed in the heating tank 101 can be detected according to whether the first sensor 107 is in the power-on state.

In this embodiment, the second sensor 108 is used to detect whether the detection box 20 is placed in the drawer 103.

In this embodiment, the second sensor 108 may be a push switch. Specifically, when the detection box 20 is placed in the drawer 103, the second sensor 108 is in the power-on state; and when the detection box 20 is not placed in the drawer 103, the second sensor 108 is in the power-off state, and thus, whether the detection box 20 is placed in the drawer 103 can be detected according to whether the second sensor 108 is in the power-on state. In this embodiment, the drawer 103 is internally configured with a liquid bead circuit chip and an electrophoresis tank. The liquid bead circuit chip is used to perform a polymerase chain reaction (PCR). The nucleic acid detector 100 performs an electrophoresis on the detection liquid in the detection box 20 by using the electrophoresis tank.

In this embodiment, the one or more time relays 109 include a time relay for calculating a heating duration of the heating tank 101 and a time relay for calculating reaction duration of PCR.

In this embodiment, the plurality of temperature sensors 110 include a first temperature sensor arranged in the heating tank 101 and a second temperature sensor arranged in the sample adding tank 102 to measure the heating temperature.

In this embodiment, the detection box 20 includes an upper layer 201 and a lower layer 202. The detection box 20 is used to perform PCR amplification reaction on the detection liquid. Specifically, by heating the detection liquid for a preset number of heating cycles (for example, 40 heating cycles) between a second temperature value (for example, 60 degrees Celsius) and a third temperature value (for example, 95 degrees Celsius), the detection liquid in the upper layer 201 completes the PCR amplification reaction. Specifically, the heating cycle is defined to be: the detection box 20 is heated from the second temperature value until the temperature reaches the third temperature value, and then the temperature is gradually reduced to the second temperature value. When a number of heating cycles reaches the preset number, the detection liquid on the upper layer 201 of the detection box 20 completes the PCR amplification reaction, and the detection liquid drips into the lower layer 200 of the detection box 20. Then, the detection liquid is combined with fluorescent dye and gel such as agarose gel in the lower layer 202, such that electrophoresis is performed on the detection liquid. In the present disclosure, the second camera 106 is used to capture images of the detection liquid during the electrophoresis.

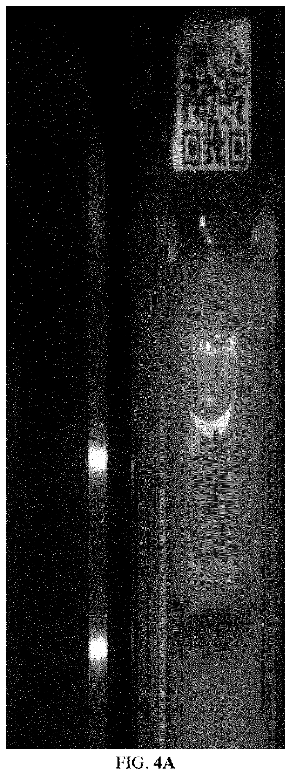

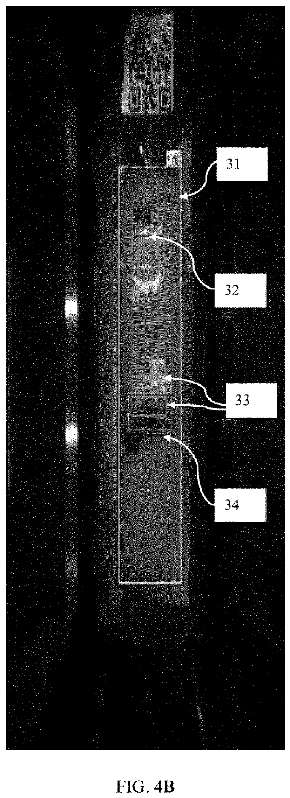

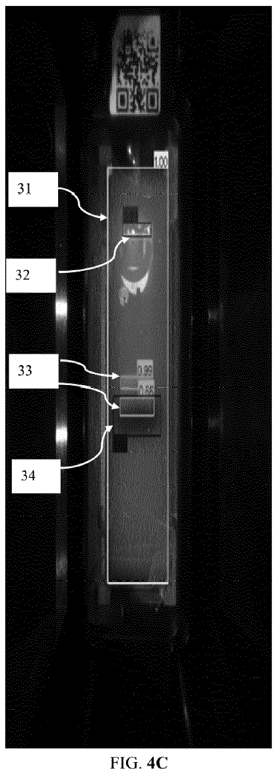

In a preferred embodiment, the detection liquid in the upper layer 201 of the detection box 20 drips into the lower layer 2020 of the detection box 20 for electrophoresis after the PCR amplification reaction is completed. When the electrophoresis is performed for a second preset time duration, the second camera 106 captures images of the detection liquid during the electrophoresis every third preset time duration, for example, 1 minute. Thereby a plurality of images as shown in FIG. 4A can be obtained. After the second camera 106 captures the plurality of images, a recognition model (also referred to as "AI image recognition program") is used to recognize the plurality of images, and then determine a target image from the plurality of images and label a recognition result as shown in FIG. 4B or FIG. 4C.

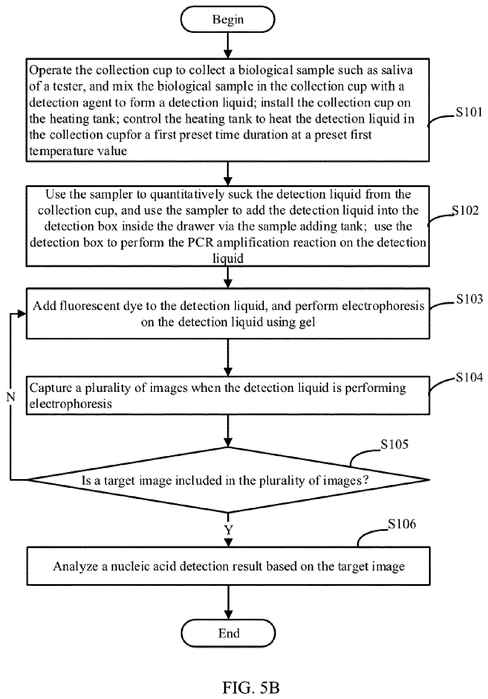

In an embodiment, the second preset time duration may be any value from 12 to 15 minutes, for example, 14 minutes. In other embodiments, the second preset time duration may be any value from 15 to 20 minutes, such as 16 minutes. A time length for electrophoresis is determined based on whether the fluorescent dye reaches a designated area. If the fluorescent dye reaches the designated area, the electrophoresis can be stopped. If the fluorescent dye has not reached the designated area, the electrophoresis continues. Details will be described later in conjunction with FIG. 5B.

In some embodiments, the at least one processor 111 may be composed of an integrated circuit. For example, the at least one processor 111 can be composed of a single packaged integrated circuit or can be composed of multiple packaged integrated circuits with the same function or different function. The at least one processor 111 includes one or more central processing units (CPUs), one or more microprocessors, one or more digital processing chips, one or more graphics processors, and various control chips. The at least one processor 111 is a control unit of the nucleic acid detector 100. The at least one processor 111 uses various interfaces and lines to connect various components of the nucleic acid detector 100, and executes programs or modules or instructions stored in the storage device 112, and invokes data stored in the storage device 112 to perform various functions of the nucleic acid detector 100 and to process data, for example, perform a function of nucleic acid detection (for details, see the description of FIG. 3).

In some embodiments, the storage device 112 may be used to store program codes and various data of computer programs. For example, the storage device 112 may be used to store the nucleic acid detection system 1001 installed in the nucleic acid detector 100 and implement completion of storing programs or data during an operation of the nucleic acid detector 100. The storage device 112 may include Read-Only Memory (ROM), Programmable Read-Only Memory (PROM), and Erasable Programmable Read-Only Memory. EPROM), One-time Programmable Read-Only Memory (OTPROM), Electronically-Erasable Programmable Read-Only Memory (EEPROM), Compact Disc (Compact Disc) Read-Only Memory (CD-ROM) or other optical disk storage, disk storage, magnetic tape storage, or any other non-transitory computer-readable storage medium that can be used to carry or store data.

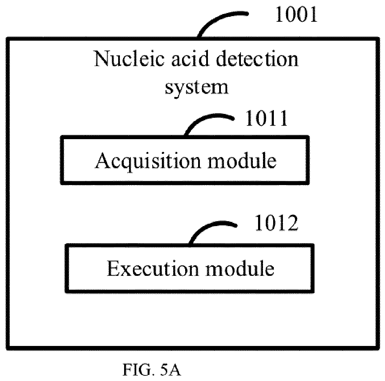

In this embodiment, the nucleic acid detection system 1001 can include one or more modules. As shown in FIG. 5A, the nucleic acid detection system 1001 can include an acquisition module 1011 and an execution module 1012. The one or more modules are stored in the storage device 112 and are executed by at least one processor (e.g. processor 111 in this embodiment), such that a function of nucleic acid detection (for details, see the introduction to FIG. 5B below) is achieved.

In a further embodiment, the storage device 112 stores program codes of computer programs, and the at least one processor 32 can invoke the program codes stored in the storage device 112 to achieve related functions. For example, each module of the nucleic acid detection system 1001 shown in FIG. 5A is program code stored in the storage device 112. Each module of the nucleic acid detection system 1001 shown in FIG. 5A is executed by the at least one processor 111, such that the functions of the modules are achieved, and the purpose of nucleic acid detection (see the description of FIG. 5B below for details) is achieved.

In one embodiment of the present disclosure, the storage device 112 stores one or more computer-readable instructions, and the one or more computer-readable instructions are executed by the at least one processor 111 to achieve a purpose of nucleic acid detection. Specifically, the computer-readable instructions executed by the at least one processor 111 to achieve the purpose of nucleic acid detection is described in detail in FIG. 5B below.

It should be noted that, in other embodiments, the nucleic acid detection system 1001 may also be implemented as an embedded system with a storage device, a processor, and other necessary hardware or software.

FIG. 5B is a flowchart of an image-based nucleic acid detection method according to a preferred embodiment of the present disclosure.

In this embodiment, the image-based nucleic acid detection method can be applied to the nucleic acid detector 100. For the nucleic acid detector 100 that requires to perform nucleic acid detection, the nucleic acid detector 100 can be directly integrated with the function of nucleic acid detection. The nucleic acid detector 100 can also achieve the function of nucleic acid detection by running a Software Development Kit (SDK).

FIG. 5B shows a flow chart of one embodiment of an image-based nucleic acid detection method. Referring to FIG. 5B, the method is provided by way of example, as there are a variety of ways to carry out the method. The method described below can be carried out using the configurations illustrated in FIG. 1, FIG. 2, and FIG. 3, for example, and various elements of these figures are referenced in explanation of method. Each block shown in FIG. 5B represents one or more processes, methods, or subroutines, carried out in the method. Furthermore, the illustrated order of blocks is illustrative only and the order of the blocks can be changed. Additional blocks can be added or fewer blocks can be utilized without departing from this disclosure. The example method can begin at block S101.

At block S101, the operator can operate the collection cup 30 to collect a biological sample such as saliva of a tester, and mix the biological sample in the collection cup 30 with a detection agent (such as buffer liquid) to form a detection liquid. Then the operator can install the collection cup 30 on the heating tank 101. The execution module 1012 can control the heating tank 101 to heat the detection liquid in the collection cup 30 for a first preset time duration at a preset first temperature value.

In a preferred embodiment of the present disclosure, the first preset temperature value is 95 degrees Celsius, and the first preset time duration is 20 minutes. That is, the heating tank 101 is used to heat the collection cup 30 at a temperature of 95 degrees Celsius for 20 minutes. Specifically, the execution module 1012 can calculate a heating duration of the heating tank 101 using the time relay 109, and when the heating duration reaches the first preset time duration, the execution module 1012 controls the heating tank 101 to stop the heating of the collection cup 30.

It should be noted that, in this embodiment, after the collection cup 30 collects the biological sample, the acquisition module 1011 can scan the identification code of the collection cup 30 using the first camera 105, and stores the identification code of the collection cup 30 in the storage device 112. The acquisition module 1011 also can scan the identification code of the sampler 40 using the first camera 105 and stores the identification code of the sampler 40 in the storage device 112.

At block S102, the operator can use the sampler 40 to quantitatively suck the detection liquid from the collection cup 30, and use the sampler 40 to add the detection liquid into the detection box 20 inside the drawer 103 via the sample adding tank 102. The detection box 20 can be used to perform the PCR amplification reaction on the detection liquid. After the detection liquid completes the PCR amplification reaction, the process goes to block S103.

Specifically, the operator can add the detection liquid to the upper layer 201 of the detection box 20 through the sample adding tank 102 by operating the sampler 40.

Specifically, by heating the detection liquid in the upper layer 201 for a preset number of heating cycles (for example, 40 heating cycles) between a second temperature value (for example, 60 degrees Celsius) and a third temperature value (for example, 95 degrees Celsius), the detection liquid in the upper layer 201 completes the PCR amplification reaction. Specifically, the heating cycle is defined to be: the detection box 20 is heated from the second temperature value until the temperature reaches the third temperature value, and then the temperature is gradually reduced to the second temperature value. When a number of heating cycles reaches the preset number (for example, 40), the detection liquid on the upper layer 201 of the detection box 20 completes the PCR amplification reaction, and the detection liquid drips into the lower layer 200 of the detection box 20.

At block S103, a fluorescent dye can be added to the detection liquid, and then an electrophoresis can be performed on the detection liquid using a gel (such as agar gum).

Specifically, when the detection liquid on the upper layer 201 of the detection box 20 completes the PCR amplification reaction, and the detection liquid on the upper layer 201 drips into the lower layer 200 of the detection box 20, as the fluorescent dye and gel are provided on the lower layer 202 of the detection box 20, therefore, the execution module 1012 can perform the electrophoresis on the detection liquid or stop the electrophoresis by controlling a voltage value applied to the detection box 20.

It should be noted that a process of the electrophoresis is actually performed by applying positive and negative voltages at both ends of the electrophoresis tank of the drawer 103. Gel can trigger electrophoresis because colloidal particles of the gel are charged. Generally speaking, it is caused by the fact that the colloidal particles have a relatively large surface area and can adsorb ions. The difference in a strength of a dipole moment formed by a uneven charge on the surface of the molecules of different substances makes the attraction of the molecules to the external charge and the moving medium different, resulting in different moving speeds in the moving medium, such that DNA fragments of different sizes are separated.

At block S104, the acquisition module 1011 can control the second camera 106 to capture a plurality of images when the detection liquid is performing electrophoresis.

In this embodiment, the acquisition module 1011 may control the time relay 109 to calculate the time duration of the electrophoresis.

In a preferred embodiment, when the electrophoresis is performed for a second preset time duration, such as 15-20 minutes, the acquisition module 1011 can control the second camera 106 to capture at least one image every third preset time duration, such as 1 minute, such that a plurality of images are obtained.

In one embodiment, the plurality of images are black and white images, as shown in FIG. 4A. In other embodiments, the plurality of images arc color images.

In one embodiment, each of the plurality of images includes the identification code of the detection box 20.

At block S105, the execution module 1012 can recognize whether there is a target image included in the plurality of images. When there is the target image included in the plurality of images, the process goes to block S106. When there is no target image included in the plurality of images, the process returns to block S103. It should be noted that when the process returns to block S103 from block S105, the detection box 20 is directly controlled to continue electrophoresis using gel. That is, there is no need to add fluorescent dyes.

In one embodiment, the execution module 1012 first recognizes whether the identification code included in each of the plurality of images is consistent with the identification codes of the collection cup 30 and the sampler 40 before recognizing the target image. When the identification code included in any one image is inconsistent with the identification codes of the collection cup 30 and the sampler 40, the execution module 1012 can transmits a warning. When the identification code included in each of the plurality of images is consistent with the identification codes of the collection cup 30 and the sampler 40, the execution module 1012 begin to recognize the target image form the plurality of images.

In one embodiment, the recognizing whether there is the target image included in the plurality of images includes (a1)-(a2):

(a1) Recognizing a plurality of target areas in each of the plurality of images using a pre-trained recognition model (also called "AI image recognition program"), and labeling each target area of the plurality of target areas with a preset mark.

In this embodiment, referring to FIG. 4B or FIG. 4C, the plurality of target areas include: an area of an injection port, an area of detection line (also referred to as the "developing strip"), an area of fluorescent dye, and an area of gel (For example, an agar gum). The area of detection line includes an area of a first line, an area of a second line, and an area of a third line. In other words, the detection line includes the first line, the second line, and the third line. In one embodiment, a presence of the first line indicates a presence of human genes included in the detection liquid. A presence of the second line indicates a presence of RNA-dependent RNA polymerase. A presence of the third line indicates a presence of N protein.

In an embodiment, the execution module 1012 may use frames with different colors to label the plurality of target areas respectively. For example, a red frame 32 is used to label the area of the injection port; a green frame 33 is used to label the area of the detection line; a blue frame 34 is used to label the area of the fluorescent dye; and a yellow frame 31 is used to label the area of gel.

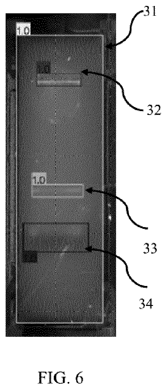

In one embodiment, the recognizing the plurality of target areas in each of the plurality of images using the pre-trained recognition model includes: recognizing the plurality of target areas from a first image among the plurality of images using the pre-trained recognition model, therefore, a position and a size of an area occupied by the gel (such as the agar gum ) in the first image is determined; and cropping each of other images according to the position and the size of the area occupied by the gel in the first image (the area occupied by the gel in the first image can also be referred to as an "overall detection area"); and then recognizing the plurality of target areas from each of the other image that have been cropped and labeling each target area. For example, FIG. 6 illustrates the labeling of each target area in one of the other images that has been cropped.

For the convenience of explanation, the "the other image that has been cropped" hereinafter referred to as the "cropped image" below.

In an embodiment, the first image may be an image having an earliest capture time among the plurality of images. The other images in the plurality of images refer to all images in the plurality of images except the first image.

It should be noted that as the execution module 1012can crop the other images and discard redundant information in the other images, the present disclosure can filter an areas in the image that may contain incorrect information (such as reflections on a clip that are similar to a shape of the line). Therefore, a requirement of a resolution of the image can be reduced and beneficial results of reducing an amount of model parameters of the pre-trained recognition model and accelerating a calculation speed of the pre-trained recognition model can be achieved.

(a2) Determining the target image from the plurality of images based on a determination of whether a designated target appears within a predetermined position range of each of the plurality of images.

In this embodiment, the designated target refers to the fluorescent dye. The predetermined position range is (0.65~0.75). That is, the target image refers to an image in which the fluorescent dye is within the predetermined position range.

In one embodiment, the determining of the target image from the plurality of images based on the determination of whether the designated target appears within the predetermined position range of each of the plurality of images includes: calculating a position value of the fluorescence dye in each image, where the position value of the fluorescent dye in each image equals a first distance divided by a length of the gel in the each image, the first distance represents a distance between a position of the fluorescent dye and a position of the injection port in the each image; when the position value of the fluorescent dye in any one image of the plurality of images falls within the predetermined position range, determining that the any one image is the target image; and when the position value of the fluorescent dye in the any one image does not fall within the predetermined position range, determining that the any one image is not the target image.

Assuming that the any one image is shown as FIG. 4B or FIG. 4C, a red frame 32 is used to label the area of the injection port, a blue frame 34 is used to label the area of the fluorescent dye, and a yellow frame 31 is used to label the area of the gel such as the agar gum, the position of the fluorescent dye in the any one image is a position of a horizontal center line of the blue frame 34. A position of the injection port of the any one image is the position of a horizontal center line of the red frame 32. A length of the gel in the any one image equals a distance from a top end to a low end of the yellow frame 31.

In other embodiments, the execution module 1012 can also use the recognition model to calculate a high-dimensional feature value of each image of the plurality of images to obtain a center position, a ratio between a length and a width of each target area of the each image ratio, and a confidence score of the each target area (the confidence score is a value between 0-1). The execution module 1012 can also filter the plurality of images according to the confidence score of the each target area of the each image. For example, when the confidence score of any target area of any one image of the plurality of images is less than a preset score, such as 0.1, then the any one image of the plurality of images is filtered out, that is, the any one image of the plurality of images is not considered as the target image, such that misjudgment of the target area caused by factors such as image noise and/or light changes can be filtered out. In other words, the target image refers to an image of which the fluorescent dye appears within the predetermined position range, and the confidence score of each target area is greater than the preset score.

In other embodiments, the execution module 1012 can also use the identification model to calculate an average brightness of pixel values of each target area. In other embodiments, the target image refers to an image of which the fluorescent dye appears within the predetermined position range, and the confidence score of each target area is greater than the preset score, and the average brightness of the pixel values of each target area is greater than a preset brightness value.

It should also be noted that if there are more than one images each of which the fluorescent dye appears within the predetermined position range, the execution module 1012 can set a certain image of the more than one images as the target image, wherein among the more than one images, a total score value of the confidence scores of all target areas in the certain image is largest and a total value of the average brightness of pixel values of all the target area in the certain image is largest.

In an embodiment, the execution module 1012 obtains the identification model by training a deep neural network using sample images, and the training of the deep neural network using the sample images includes (a11)-(a12):

(a11) Acquiring a preset number (for example, 10,000) of sample images, each sample image of the preset number of sample images includes marks of the plurality of target areas, and the plurality of target areas include the area of the injection port, the area of the detection line, the area of the fluorescent dye, and the area of the gel such as the agar gum. Different target areas are labeled with different marks. The area of the detection line includes the area of the first line, the area of the second line, and the area of the third line.

In an embodiment, the different areas are labeled using frames of different colors. In other words, the different marks can be frames of different colors. For example, a red frame is used to label the area of the injection port; the green frame is used to label the area of the detection line; the blue frame is used to label the area of the fluorescent dye; and the yellow frame is used to label the area of the agar gum.

In this embodiment, the preset number of sample images may be images of detection liquid taken by dozens of nucleic acid detectors 100 during electrophoresis.

(a12) Randomly dividing the preset number of sample images into a training set and a verification set, and obtaining the identification model by training the deep neural network using the training set and verifying an accuracy of the identification model using the verification set.

If the accuracy rate is greater than or equal to a preset accuracy rate, the training ends; if the accuracy rate is less than the preset accuracy rate, adding more sample images to retrain the deep neural network until the recognition model is re-obtained, and the accuracy rate is greater than or equal to the preset accuracy rate.

Therefore, the execution module 1012 can use the recognition model to identify and label the area of the injection port, the area of the detection line, the area of the fluorescent dye, and the area of the gel in each image of the plurality of images.

At block S106, the execution module 1012 analyzes a nucleic acid detection result based on the target image. The execution module 1012 also outputs the nucleic acid detection result. For example, the execution module 1012 displays the nucleic acid detection result on the display screen 104.

In an embodiment, the execution module 1012 also uploads the nucleic acid detection result to a blockchain.

In this embodiment, the analyzing the nucleic acid detection result based on the target image includes (c1)-(c4):

(c1) Determining positions of a plurality of targets according to the mark (for example, the boxes of different colors) corresponding to each of the plurality of target areas in the target image. The positions of the plurality of targets include a position of the injection port, a position of the fluorescent dye, a position of the detection line, and a position of the gel such as the agar gum, wherein the detection line includes the first line, the second line, and the third line.

It should be noted that the plurality of targets are the injection port, the fluorescent dye, the detection line, and the gel.

Taking the target image as the image shown in FIG. 4B or 4C as an example, suppose that a yellow frame 31 is used to label the area of the gel, a red frame 32 is used to label the area of the injection port, and a green frame 33 is used to label the area of the detection line. A length of the gel of the target image equals a linear distance from the top end to the low end of the yellow frame 31. The position of the injection port of the target image is the position of the horizontal center line of the red frame 32. The position of each detection line of the target image is the position of the horizontal center line of each green frame 33. The position of the fluorescent dye of the target image is the position of the horizontal centerline of the basket 34.

(c2) Calculating the position value of the detection line based on the positions of the plurality of targets.

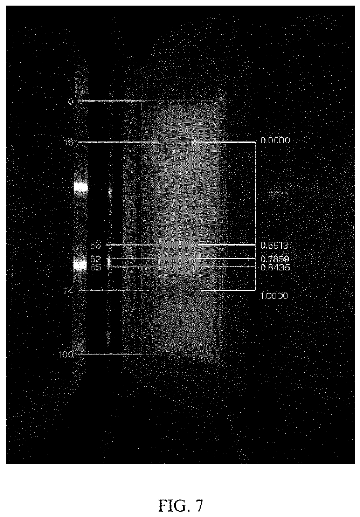

In one embodiment, P0 represents the position value of the detection line, P0=d1/d2, d1 represents a distance between the position of the injection port and a position of the detection line, and d2 is equal to a distance from the position of the injection port to the position of the fluorescent dye. In an embodiment, referring to FIG. 7, the top end to the low end of the area of the agar gum can be equally divided into 100 scales, thereby realizing the calculation of d1 and d2. In other embodiments, the distance between the position of the injection port and the position of the fluorescent dye may also be taken as an integer 1, and then the distance between the position of the injection port and the position of the fluorescent dye can be divided into a plurality of scales, thereby realizing the calculation of d1 and d2.

Specifically, P1 represents the position value of the first line, P1 = d11/d2 (the position value P1 of the first line can also be referred to as "IC"), P2 represents the position value of the second line, P2 = d12/d2, and P3 represents the position value of the third line, P3=d13/d2, where d11 represents a distance between the position of the first line and the position of the injection port, and d12 represents a difference between the position of the second line and the position of the injection port. d13 represents a distance between the position of the third line and the position of the injection port, and d2 is equal to a distance between the position of the injection port and the position of the fluorescent dye.

(c3) Determining whether the detection line is valid according to a comparison between the position value of the detection line and a preset valid data range.

In this embodiment, when the position value P0 of the detection line falls within the preset valid data range, the execution module 1012 determines that the detection line is valid. When the position value P0 of the detection line is not within the preset valid data range, the execution module 1012 determines that the detection line is invalid.

It should also be noted that when the detection line is not recognized from the target image, the execution module 1012 directly determines that the detection line is invalid. For example, when the first line is not recognized from the target image, it is directly determined that the first line is invalid. Similarly, when the second line is not recognized from the target image, the second line is directly determined to be invalid. When the third line is not recognized from the target image, the third line is directly determined to be invalid.

In this embodiment, a preset first valid data range corresponding to the first line is [A, B], preferably, A=62.0%; B=77.0%.

In this embodiment, the execution module 1012 sets a second valid data range for the second line and sets a third valid data range for the third line according to the position value P1 of the first line.

Specifically, the second valid data range is preset as [A1, B1] for the second line, where A1=P1+C1; B1=P1+C2; preferably, C1=6% ; C2=12%.

The third valid data range for the third line is preset as [A2, B2], where A2=P1+C2; B2=P1+C3; preferably, C3=18%.

In this embodiment, when the position value P1 of the first line falls within the preset first valid data range, the execution module 1012 determines that the first line is valid. When the position value P1 of the first line does not fall within the preset first valid data range, the execution module 1012 determines that the first line is invalid.

When the position value P2 of the second line falls within the preset second valid data range, the execution module 1012 determines that the second line is valid. When the position value P2 of the second line does not fall within the preset second valid data range, the execution module 1012 determines that the second line is invalid.

When the position value P3 of the third line falls within the preset third valid data range, the execution module 1012 determines that the third line is valid. When the position value P3 of the third line does not fall within the preset third valid data range, the execution module 1012 determines that the third line is invalid.

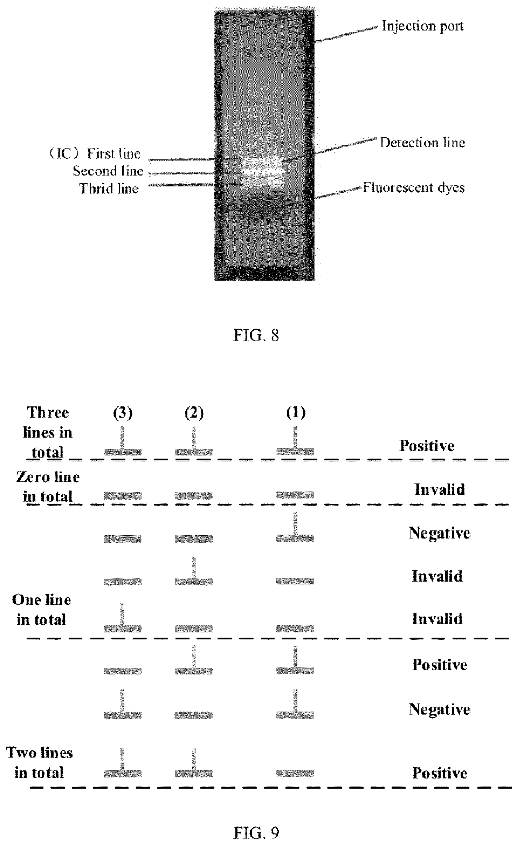

For example, assuming that the first valid data range of the first line is [62.0%-77.0%], the position value of the first line is calculated to be 64.4%, which falls within the first valid data range, then the execution module 1012 determines that the first line is valid, and mark the first line in the target image with IC (Internal Control). As shown in FIG. 8, in this embodiment, the first line is used to determine whether human genes are present in the detection liquid. That is, when the first line is present, it means that human genes are present in the detection liquid.

For another example, the second valid data range of the first detection line is [70.4%-76.4%], and the second line is used to determine whether there is RNA-dependent RNA polymerase. For another example, the second valid data range of the third line [76.4%-82.4%], the third line is used to detect the presence of N protein.

(c4) Determining the nucleic acid test result according to whether the detection line is valid.

Specifically, referring to FIG. 9, (1) represents the first line, (2) represents the second line, and (3) represents the third line. When the first line that is valid appears in the target image, it means that the detection liquid contains human genes. When there is no valid first line appears in the target image, it means that the detection liquid does not contain human genes. Similarly, when the second line that is valid appears in the target image, it means that the detection liquid contains RNA-dependent RNA polymerase. When a valid second line does not appear in the target image, it means that the detection liquid does not contain RNA-dependent RNA polymerase. When a valid third line appears in the target image, it means that the detection liquid contains N protein. When a valid third line does not appear in the target image, it means that the detection liquid does not contain N protein.

The nucleic acid detector 100 can determine whether the nucleic acid test result of the detection liquid is positive or negative according to follows:

When the first line, the second line, and the third line in the target image are valid, the nucleic acid test result is: the detection liquid contains human genes and is a positive reaction.

When the first line and second line in the target image are valid, but the third line does not appear in the target image, the nucleic acid test result is: the detection liquid contains human genes and is a positive reaction.

When the first line and third line in the target image are valid, but the second line does not appear in the target image, the nucleic acid test result is: the detection liquid contains human genes and is a positive reaction.

When the first line in the target image is valid, but the second line and the third line do not appear in the target image, the nucleic acid test result is: the detection liquid contains human genes and shows a negative reaction.

When the second line in the target image is valid, but the first line and the third line do not appear in the target image, the nucleic acid test result is: the detection liquid does not contain human genes, and it is impossible to determine a positive reaction or a negative reaction.

When the third line in the target image is valid, but the first line and the second line do not appear in the target image, the nucleic acid test result is: the detection liquid does not contain human genes, and it is impossible to determine a positive reaction or a negative reaction.

When the second line and third line in the target image are valid, but the second line does not appear in the target image, the nucleic acid test result is: the detection liquid does not contain human genes, and it is impossible to determine a positive reaction or a negative reaction.

The above description is only embodiments of the present disclosure, and is not intended to limit the present disclosure, and various modifications and changes can be made to the present disclosure. Any modifications, equivalent substitutions, improvements, etc. made within the spirit and scope of the present disclosure are intended to be included within the scope of the present disclosure.

## Claims

1. An image-based nucleic acid detection method applied to a nucleic acid detector (100), **characterized in that**, the method comprising:
obtaining a plurality of images when detection liquid is performing electrophoresis;
recognizing a target image from the plurality of images; and
analyzing a nucleic acid detection result based on the target image.

2. The image-based nucleic acid detection method according to claim 1, **characterized in that**, the method further comprises:
collecting a biological sample of a tester using a collection cup of the nucleic acid detector, and forming the detection liquid by mixing the biological sample with a detection agent;
installing the collection cup on a heating tank of the nucleic acid detector;
heating the detection liquid in the collection cup for a first preset time duration at a preset first temperature value using the heating tank;
sucking the detection liquid from the collection cup and adding the detection liquid into a detection box inside a drawer via a sample adding tank by a sampler of the nucleic acid detector, wherein the detection box performs polymerase chain reaction on the detection liquid; and
adding fluorescent dye to the detection liquid, and electrophoresing the detection liquid with gel.

3. The image-based nucleic acid detection method according to claim 2, **characterized in that**, the obtaining the plurality of images comprises:
controlling a time relay to calculate a time duration of the electrophoresis; and
obtaining the plurality of images, when the detection liquid is electrophoresed for a second preset time duration, by a second camera to capture at least one image every third preset time duration.

4. The image-based nucleic acid detection method according to claim 1, **characterized in that**, the recognizing the target image from the plurality of images comprises:
recognizing a plurality of target areas in each of the plurality of images by applying a recognition model, and labeling each target area of the plurality of target areas with a preset mark; and
determining the target image from the plurality of images based on a determination of whether a designated target appears within a predetermined position range of each of the plurality of images.

5. The image-based nucleic acid detection method according to claim 4, **characterized in that**, the recognizing the plurality of target areas in each of the plurality of images by applying the recognition model comprises:
recognizing the plurality of target areas from a first image among the plurality of images by applying the recognition model;
cropping each of other images according to a position and a size of an area occupied by the gel in the first image; and
recognizing the plurality of target areas from each of the other image that is cropped and labeling each target area with the preset mark.

6. The image-based nucleic acid detection method according to claim 5, **characterized in that**, the first image is an image having an earliest capture time among the plurality of images; the other images in the plurality of images are all images in the plurality of images except the first image.

7. The image-based nucleic acid detection method according to claim 4, **characterized in that**, the target image is an image in which fluorescent dye is within a predetermined position range.

8. The image-based nucleic acid detection method according to claim 7, **characterized in that**, the target image is an image of which the fluorescent dye appears within the predetermined position range, and a confidence score of each target area is greater than a preset score.

9. The image-based nucleic acid detection method according to claim 4, **characterized in that**, the analyzing the nucleic acid detection result based on the target image comprises:
determining positions of a plurality of targets according to a mark corresponding to each of the plurality of target areas in the target image, wherein the positions of the plurality of targets comprise a position of an injection port, a position of the fluorescent dye, a position of a detection line, and a position of the gel, wherein the detection line comprises a first line, a second line, and a third line;
calculating a position value of the detection line based on the positions of the plurality of targets;
determining whether the detection line is valid according to a comparison between the position value of the detection line and a preset valid data range; and
determining the nucleic acid test result according to whether the detection line is valid.

10. The image-based nucleic acid detection method according to claim 9, **characterized in that**,
P1 represents the position value of the first line, P1 = d11/d2;
P2 represents the position value of the second line, P2 = d12/d2; and
P3 represents the position value of the third line, P3=d13/d2; wherein
d11 represents a distance between the position of the first line and the position of the injection port;
d12 represents a difference between the position of the second line and the position of the injection port;
d13 represents a distance between the position of the third line and the position of the injection port; and
d2 is equal to a distance between the position of the injection port and the position of the fluorescent dye.

11. A nucleic acid detector (100), **characterized in that**, comprising:
a storage device (112);
at least one processor (111); and
the storage device (112) storing one or more programs, which when executed by the at least one processor (111), cause the at least one processor (111) to:
obtain a plurality of images when detection liquid is performing electrophoresis;
recognize a target image from the plurality of images; and
analyze a nucleic acid detection result based on the target image.

12. The nucleic acid detector (100) according to claim 11, **characterized in that**, the nucleic acid detector (100) further comprises:
a collection cup (30) configured for collecting a biological sample, the biological sample is mixed with a detection agent to form the detection liquid;
a heating tank (101) configured for heating the detection liquid in the collection cup (30) for a first preset time duration at a preset first temperature value when the collection cup (30) is installed on the heating tank (101); and
a sampler (40) configured for sucking the detection liquid from the collection cup (30) and adding the detection liquid into a detection box (20) inside a drawer (103) via a sample adding tank (102), the detection box (20) performs polymerase chain reaction on the detection liquid, wherein when the detection liquid completes the polymerase chain reaction, fluorescent dye and gel are added in the detection liquid, and electrophoresis is performed on the detection liquid.

13. The nucleic acid detector (100) according to claim 12, **characterized in that**, the obtaining the plurality of images comprises:
controlling a time relay to calculate a time duration of the electrophoresis; and
obtaining the plurality of images, when the detection liquid is electrophoresed for a second preset time duration, by a second camera to capture at least one image every third preset time duration.

14. The nucleic acid detector (100) according to claim 11, **characterized in that**, the recognizing the target image from the plurality of images comprises:
recognizing a plurality of target areas in each of the plurality of images by applying a recognition model, and labeling each target area of the plurality of target areas with a preset mark; and
determining the target image from the plurality of images based on a determination of whether a designated target appears within a predetermined position range of each of the plurality of images.

15. The nucleic acid detector (100) according to claim 14, **characterized in that**, the recognizing the plurality of target areas in each of the plurality of images by applying the recognition model comprises:
recognizing the plurality of target areas from a first image among the plurality of images by applying the recognition model;
cropping each of other images according to a position and a size of an area occupied by the gel in the first image; and
recognizing the plurality of target areas from each of the other image that is cropped and labeling each target area with the preset mark.
